# EUROPEAN PATENT APPLICATION

(11) **EP 4 498 299 A1**
(43) Date of publication of application: **29.01.2025**
(21) Application number: 23306280.1
(22) Date of filing: 24.07.2023
(51) Int. Cl.: G06Q 10/04, G06Q 10/0637

(54) **METHOD AND DEVICE FOR PRODUCT LIFE CYCLE ANALYSIS**

(71) Applicant: BULL SAS, 78340 Les Clayes-sous-Bois (FR)
(72) Inventor: CAMINEL, Thierry, Toulouse (FR)
(74) Representative: Argyma

(57) **Abstract**

The invention relates to a method for determining the environmental impact of a product, comprising the steps of obtaining a list of components of the product, for each component, requesting (S2) a list of materials from a life cycle inventory database (20) generating (S4) a request comprising said obtained list of materials for selecting the most suitable material for said product, sending (S5) said request to a language model module (30), receiving (S6) the name of the most suitable material for said product, for each name of each material of each component, requesting (S7) the life cycle inventory database to send at least one environmental impact value, receiving (S8) said at least one environmental impact value for each name of each material of each component, calculating (S9) the total environmental impact of the product using the received at least one environmental impact values and their respective mass in the product.

## Description

### [Field of the invention]

The field of the invention relates to life cycle of products and, more particularly, to a method and device for determining the environmental impact of a product.

### [Background of the invention]

Life cycle management of products has become a key issue nowadays. In particular, it is known to estimate the environmental impact of each product to evaluate its impact on the environment. Such estimations are conducted by life cycle consultants using Life Cycle Inventory (LCI) databases containing the environmental impact values of different materials and products called Emission Factors, such as e.g. global warning potential (carbon footprint), ecotoxicity, eutrophication, ozone depletion, water use, etc.

Product Life Cycle Analysis (LCA) calculation of a product is a time-consuming process that requires training. Typically, a LCA consultant needs to decompose the product he has to analyze into components and sub-components and finds at some point the closest matches in an Emission Factors (EF) database, for the materials themselves and for process applied to them (like extrusion for plastics, sawing for wood, etc.).

If there is no correct match, the consultant might need to decompose further the component in items that exist and/or find components or materials that he knows they have similar manufacturing process (and so similar emission factors).

The consultant takes also into account emissions for the transportation of the product, its utilization (such as electricity) and its end of life (like waste disposal). That also implies the search for emission factors in databases and heuristics.

Such method is time-consuming, and a lot of know-how is required. This prevents LCA calculation to be used broadly, and thus become a widely used activity to measure and compare environmental impact of services and products - a key ingredient to achieve sustainability.

It is therefore an object of the present invention to provide a device and method to remedy to these drawbacks at least partly.

### [Summary of the invention]

To this end, the present invention relates to a method for determining the environmental impact of a product, said method, implemented by a life cycle module, comprising the steps of:
- obtaining a list of components of the product, and, for each component, obtaining a list of type of materials,
- for each type of material of each component, requesting a list of materials from a life cycle inventory database and receiving said list of materials from said life cycle inventory database,
- for each received list of materials, generating a request comprising said obtained list of materials for selecting the most suitable material for said product,
- sending said request to a language model module, said request being a prompt,
- receiving a reply from said language model module, said reply comprising the name of the most suitable material for said product,
- for each name of each material of each component, requesting the life cycle inventory database to send at least one environmental impact value,
- receiving from the life cycle inventory database the at least one environmental impact value for each name of each material of each component,
- calculating the total environmental impact of the product using the received at least one environmental impact values and their respective mass in the product.

Environmental impact values may be for example global warning potential (carbon footprint), ecotoxicity, eutrophication, ozone depletion, water use, etc.

The method according to the invention allows to drastically simplify and render fast the calculation of environmental impact for the life cycle consultant. The method also allows a non-expert person to calculate themselves the environmental impact of a product easily and without any specific knowledge.

Advantageously, the request comprising the obtained list of materials for selecting the most suitable material for said product also comprises a description of each material and/or the activity domain of each material. The activity domain may include the name of the material itself or at least relates to said name. The description of a material allows to formulate a short and efficient prompt request to the language model module.

According to an embodiment, the description of each material is a summary obtained by features extraction of a longer text.

In an embodiment, the method comprises, for obtaining the list of components of the product, a step a receiving the product name, a step of sending a request to a language model module, said request comprising the received product name, a step of receiving from the language model module the list of components and for each component the list of type of materials.

In an embodiment, the method comprises a preliminary step of receiving the list of components of the product, said list comprising, for each component, a list of type of materials.

Preferably, when one or several requested types of material are not listed in the life cycle inventory database, a step of requesting a language model module for a similar type of material and requesting a list of materials from the life cycle inventory database for said similar type of material.

Advantageously, the method comprises a step of vectorizing the list of materials received from the life cycle inventory database when generating a request comprising said obtained list of materials for each received list of materials.

The invention also relates to a computer program comprising instructions which, when the program is executed by a computer, cause the computer to carry out the steps of the method described here before.

The invention also relates to a life cycle module for determining the environmental impact of a product, said life cycle module being configured to:
- obtain a list of components of the product, and, for each component, obtain a list of type of materials,
- for each type of material of each component, request a list of materials from a life cycle inventory database and receive said list of materials from said life cycle inventory database,
- for each received list of materials, generate a request comprising said obtained list of materials for selecting the most suitable material for said product,
- send said request to a language model module,
- receive a reply from said language model module, said reply comprising the name of the most suitable material for said product,
- for each name of each material of each component, request the life cycle inventory database to send at least one environmental impact value,
- receive from the life cycle inventory database the at least one environmental impact value for each name of each material of each component,
- calculate the total environmental impact of the product using the received at least one environmental impact values and their respective mass in the product.

Advantageously, the module is configured to insert a description of each material and/or the activity domain of each material in the request comprising the obtained list of materials for selecting the most suitable material for the product.

In an embodiment, the life cycle module is configured to receive the product name, to send a request to a language model module, said request comprising the received product name, and to receive from the language model module the list of components and for each component the list of type of materials.

In an embodiment, the life cycle module is configured to receive the list of components of the product, said list comprising, for each component, a list of type of materials.

In an embodiment, the life cycle module is configured to, when one or several requested types of material are not listed in the life cycle inventory database, request a language model module for a similar type of material and request a list of materials from the life cycle inventory database for said similar type of material.

In an embodiment, the life cycle module is configured to vectorize the list of materials received from the life cycle inventory database when generating a request comprising said obtained list of materials for each received list of materials.

The invention also relates to a system for determining the environmental impact of a product, said system comprising a life cycle module as described here before, a life cycle inventory database configured to communicate with said life cycle module via a database communication link and a language model module configured to communicate with said life cycle module via a language model communication link.

### [Brief description of the drawings]

These and other features, aspects, and advantages of the present invention are better understood with regard to the following Detailed Description of the Preferred Embodiments, appended Claims, and accompanying Figures, where:
Figure 1 schematically illustrates an embodiment of the system according to the invention.

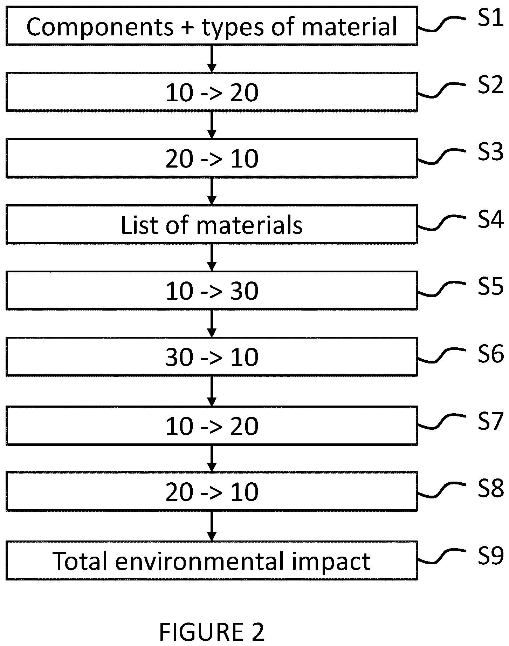

Figure 2 schematically illustrates an embodiment of the method according to the invention.

### [Detailed description]

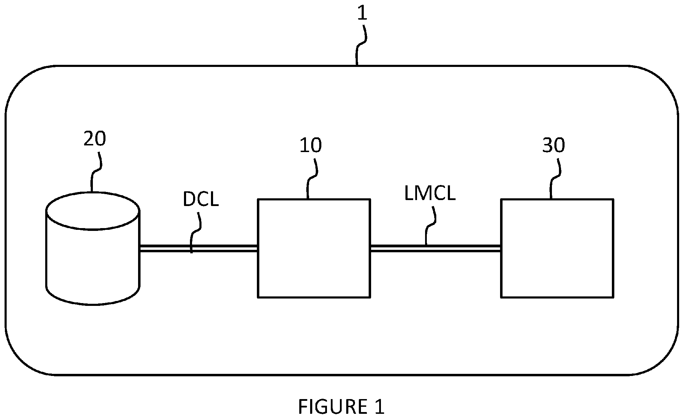

Figure 1 illustrates an example of system 1 according to the invention for determining the environmental impact of a product.

### System 1

The system 1 comprises a life cycle module 10, a life cycle inventory database 20 configured to communicate with said life cycle module 10 via a database communication link DCL and a language model module 30 configured to communicate with said life cycle module 10 via a language model communication link LMCL.

### Life cycle module 10

The life cycle module 10 is configured to obtain a list of components of the product and, for each component, a list of type of materials.

Preferably, the life cycle module 10 is configured to receive the product name, to send a request to the language model module 30, said request comprising the received product name, and to receive from the language model module 30 the list of components and for each component the list of type of materials.

Alternatively or in addition, the life cycle module 10 is configured to receive the list of components of the product, said list comprising, for each component, a list of type of materials.

The life cycle module 10 is configured to, for each type of material of each component, request a list of materials from the life cycle inventory database 20 and to receive said list of materials from said life cycle inventory database 20.

Preferably, the life cycle module 10 is configured to vectorize the list of materials received from the life cycle inventory database when generating the request comprising the obtained list of materials for each received list of materials.

To this end, the life cycle module 10 comprise a vector store, which stores vectors associated to the material and transformation descriptions. These vectors, called "embeddings", are calculated by a language model algorithm, which is different from the language model module 30. These vectors are used to perform semantic similarity matching.

Preferably, the life cycle module 10 is configured to, when one or several requested types of material are not listed in the life cycle inventory database, request the language model module 30 for a similar type of material and request a list of materials from the life cycle inventory database 20 for said similar type of material.

The life cycle module 10 is configured to, for each received list of materials, generate a request comprising said obtained list of materials for selecting the most suitable material for said product. Preferably, the life cycle module 10 is configured to insert a description of each material and/or the activity domain of each material in the request comprising the obtained list of materials for selecting the most suitable material for the product.

The life cycle module 10 is configured to send said request to the language model module 30.

The life cycle module 10 is configured to receive a reply from said language model module 30, said reply comprising the name of the most suitable material for said product.

The life cycle module 10 is configured to, for each name of each material of each component, request the life cycle inventory database 20 to send at least one environmental impact value for said name.

The life cycle module 10 is configured to receive from the life cycle inventory database 20 the at least one environmental impact value for each name of each material of each component.

The life cycle module 10 is configured to calculate the total environmental impact of the product using the received at least one environmental impact values and their respective mass (or percentage) in the product.

### Life cycle inventory database 20

The life cycle inventory database 20 is a LCI (Life Cycle Inventory)-type database.

The life cycle inventory database 20 comprises information on the average environmental footprint of most materials and processes used in our daily lives and national economies.

Advantageously, the life cycle inventory database 20 comprises on one side the description of materials and activities (transformation, recycling, ...), and on another side values of the corresponding emission factors. For example, the life cycle inventory database 20 may comprise for the material "copper" and activities related to "milling", values of emission factors for the supply of copper and its transformations.

For example, the life cycle inventory database 20 may be Ecoinvent^{®}.

### Language model module 30

The language model module 30 comprises a language model algorithm and preferably a Large Language Model algorithm, still preferably an Instruction Tuned Large Language Model algorithm. These algorithms, leveraging extensive datasets and sophisticated neural network architectures, exhibit a profound understanding of language, enabling them to reason and generate contextually relevant and coherent text. A known example of LLM that can be used in the present invention is GPT-4^{®}.

### Example of operation

In a step S1, the life cycle module 10 obtains a list of components of the product and, for each component, a list of type of materials.

Step S1 may comprise receiving the product name, sending a request to the language model module 30, said request comprising the received product name, and receiving from the language model module 30 the list of components and for each component the list of type of materials.

Alternatively, step S1 may comprise receiving directly the list of components of the product, and, for each component, a list of type of materials.

In a step S2, the life cycle module 10 requests, for each type of material of each component, a list of materials to the life cycle inventory database 20 and receives said list of materials from said life cycle inventory database 20 in a step S3.

When one or several requested types of material are not listed in the life cycle inventory database 20, the life cycle module 10 requests the language model module 30 for a similar type of material and requests the list of materials from the life cycle inventory database 20 for said similar type of material.

For each received list of materials, the life cycle module 10 generates in a step S4 a request being a prompt and comprising said obtained list of materials for selecting the most suitable material for said product, then sends said generated request to the language model module 30 in a step S5. Preferably, the request comprising the obtained list of materials for selecting the most suitable material for said product also comprises a description of each material and/or the activity domain of each material. This description may be a summary obtained by features extraction of a longer text collected from the life cycle inventory database 20.

Advantageously, the life cycle module 10 vectorizes the list of materials received from the life cycle inventory database 20 when generating the request comprising said obtained list of materials for each received list of materials in order to ease the processing of said request by the language model module 30.

The life cycle module 10 receives in a step S6 a reply from said language model module 30, comprising the name of the most suitable material for the product. Advantageously, the user may have the possibility to re-iterate, select materials between alternatives, precise or fix others, etc.

Then, in a step S7, for each suitable name of each material of each component, the life cycle module 10 requests the life cycle inventory database 20 to send at least one environmental impact value of said each material.

In a step S8, the life cycle module 10 receives from the life cycle inventory database 20 the at least one environmental impact value for each name of each material of each component.

Finally, in a step S9, the life cycle module 10 calculates the total environmental impact of the product using the received at least one environmental impact values and their respective mass in the product.

Advantageously, an operator may interact at any time to select between options, propose other components or materials, etc.

The device and method according to the invention allow therefore to efficiently, rapidly, automatically and easily determine the environmental footprint of a product, therefore significantly simplifying the tasks to be performed by the LCA consultant.

## Claims

1. A method for determining the environmental impact of a product, said method, implemented by a life cycle module (10), comprising the steps of:
- obtaining (S1) a list of components of the product and, for each component, a list of type of materials,
- for each type of material of each component, requesting (S2) a list of materials from a life cycle inventory database (20) and receiving (S3) said list of materials from said life cycle inventory database (20),
- for each received list of materials, generating (S4) a request comprising said obtained list of materials for selecting the most suitable material for said product,
- sending (S5) said request to a language model module (30),
- receiving (S6) a reply from said language model module (30), said reply comprising the name of the most suitable material for said product,
- for each name of each material of each component, requesting (S7) the life cycle inventory database (20) to send at least one environmental impact value,
- receiving (S8) from the life cycle inventory database the at least one environmental impact value for each name of each material of each component,
- calculating (S9) the total environmental impact of the product using the received at least one environmental impact values and their respective mass in the product.

2. The method according to claim 1, wherein the request comprising the obtained list of materials for selecting the most suitable material for said product also comprises a description of each material and/or the activity domain of each material.

3. The method according to the preceding claim, wherein the description of each material is a summary obtained by features extraction of a longer text.

4. The method according to any of the preceding claims, said method comprising, for obtaining the list of components of the product, a step a receiving the product name, a step of sending a request to a language model module (30), said request comprising the received product name, a step of receiving from the language model module the list of components and for each component the list of type of materials.

5. The method according to any of claims 1 to 4, comprising a preliminary step of receiving the list of components of the product, said list comprising, for each component, a list of type of materials.

6. The method according to any of the preceding claims, said method comprising, when one or several requested types of material are not listed in the life cycle inventory database (20), a step of requesting a language model module (30) for a similar type of material and requesting a list of materials from the life cycle inventory database (20) for said similar type of material.

7. The method according to any of the preceding claims, further comprising a step of vectorizing the list of materials received from the life cycle inventory database (20) when generating a request comprising said obtained list of materials for each received list of materials.

8. A computer program comprising instructions which, when the program is executed by a computer, cause the computer to carry out the steps of the method according to any one of the preceding claims.

9. A life cycle module (10) for determining the environmental impact of a product, said life cycle module (10) being configured to:
- obtain a list of components of the product, and, for each component, obtain a list of type of materials,
- for each type of material of each component, request a list of materials from a life cycle inventory database (20) and receive said list of materials from said life cycle inventory database (20),
- for each received list of materials, generate a request comprising said obtained list of materials for selecting the most suitable material for said product,
- send said request to a language model module (30),
- receive a reply from said language model module (30), said reply comprising the name of the most suitable material for said product,
- for each name of each material of each component, request the life cycle inventory database (20) to send at least one environmental impact value,
- receive from the life cycle inventory database (20) said at least one environmental impact value for each name of each material of each component,
- calculate the total environmental impact of the product using the received at least one environmental impact values and their respective mass in the product.

10. The life cycle module according to the preceding claim, said life cycle module being configured to insert a description of each material and/or the activity domain of each material in the request comprising the obtained list of materials for selecting the most suitable material for the product.

11. The life cycle module according to any of claims 9 or 10, said life cycle module being configured to receive the product name, to send a request to a language model module (30), said request comprising the received product name, and to receive from the language model module (30) the list of components and for each component the list of type of materials.

12. The life cycle module (10) according to any of claims 9 or 10, said life cycle module (10) being configured to receive the list of components of the product, said list comprising, for each component, a list of type of materials.

13. The life cycle module (10) according to any of claims 9 to 12, said life cycle module being configured to, when one or several requested types of material are not listed in the life cycle inventory database (20), request a language model module (30) for a similar type of material and request a list of materials from the life cycle inventory database (20) for said similar type of material.

14. The life cycle module (10) according to any of claims 9 to 13, said life cycle module being (10) configured to vectorize the list of materials received from the life cycle inventory database (20) when generating a request comprising said obtained list of materials for each received list of materials.

15. A system (1) for determining the environmental impact of a product, said system (1) comprising a life cycle module (10) according to any of claims 8 to 14, a life cycle inventory database (20) configured to communicate with said life cycle module (10) via a database communication link (DCL) and a language model module (30) configured to communicate with said life cycle module (10) via a language model communication link (LMCL).
